# EUROPÄISCHE PATENTSCHRIFT

(11) **EP 4 345 036 B1**
(45) Veröffentlichungstag und Bekanntmachung des Hinweises auf die Patenterteilung: **05.11.2025**
(21) Anmeldenummer: 23197160.7
(22) Anmeldetag: 13.09.2023
(51) Int. Cl.: B65G 47/90, B25J 15/00, B25J 15/02

(54) **VORRICHTUNG ZUM GREIFEN EINER FLÄCHIGEN STRUKTUR MIT ÖFFNUNGEN IM BEREICH IHRER OBERSEITE**
DEVICE FOR GRIPPING A FLAT STRUCTURE WITH OPENINGS IN THE AREA OF ITS TOP SIDE
DISPOSITIF DE PRÉHENSION D'UNE STRUCTURE PLATE AVEC DES OUVERTURES DANS LA ZONE SUPÉRIEURE

(30) Priorität: 14.09.2022 DE 102022123476
(43) Veröffentlichungstag der Anmeldung: 03.04.2024
(73) Patentinhaber: Cevotec GmbH, 82008 Unterhaching (DE)
(72) Erfinder: Woods, David, 83064 Raubling (DE); Carle, Richard, 81545 München (DE); Lenz, Florian, 86573 Obergriesbach (DE)
(74) Vertreter: Weickmann & Weickmann PartmbB

(56) Entgegenhaltungen:
- CZ-B6- 280 142
- JP-A- 2000 317 871
- US-A- 5 116 094
- US-A1- 2007 204 569
- US-A1- 2015 274 491

## Beschreibung

Die vorliegende Erfindung betrifft eine Vorrichtung zum Greifen einer flächigen Struktur mit Öffnungen im Bereich ihrer Oberseite, insbesondere einer Wabenstruktur, eine Baugruppe, umfassend wenigstens zwei derartige Vorrichtungen, sowie ein Verfahren zum Greifen einer flächigen Struktur mit Öffnungen im Bereich ihrer Oberseite, insbesondere einer Wabenstruktur, mittels einer derartigen Vorrichtung.

Es ist bekannt, dass flächige Strukturen und insbesondere Wabenstrukturen während ihrer Verarbeitung gelegentlich transportiert werden müssen, also mittels einer geeigneten Vorrichtung aufgenommen, an einen anderen Ort verlagert und anschließend wieder abgelegt. Hierbei ist zu beachten, dass derartige Strukturen zur Verringerung ihres Gewichts häufig mit einer relativ geringen Materialstärke ausgebildet und dementsprechend leicht zu beschädigen sind, so dass die Handhabung davon in einer schonenden Weise stattzufinden hat.

Zu diesem Zweck sind aus dem Stand der Technik unterschiedliche Ansätze bekannt, wie Vorrichtungen zum Handhaben derartiger Strukturen ausgebildet sein können. Beispielsweise ist aus der US 5,116,094 eine Vorrichtung bekannt, in welcher eine Mehrzahl von Stiften vorgesehen sind, welche an jeweiligen Armen vorstehend angebracht sind, wobei die Stifte in die Öffnungen der flächigen Struktur eingeführt und dann linear auseinanderbewegt werden können, um schließlich mit Wandungen der Struktur in Kontakt zu kommen, so dass durch den hierbei entstehenden Materialschluss ein Anheben der Struktur und letztlich ein Transport davon ermöglicht wird.

Ähnliche Ansätze werden ebenfalls in der DE 10 2004 007 226 A1 und der US 4,975,020 verfolgt, welche in analoger Weise Vorrichtungen offenbaren, in welchen Stifte, Finger oder ähnliche vorstehende Elemente zunächst einmal in Öffnungen einer flächigen Struktur eingeführt und anschließend linear voneinander entfernt werden, um mit Wandungen der Struktur in Kontakt zu kommen und diese anschließend transportieren zu können.

US 2015/274491 A1 offenbart Greifereinheiten, die mindestens einen Stift umfassen.

Hierbei zeigt sich jedoch, dass die aus dem Stand der Technik bekannten Lösungen relativ unflexibel sind, da die lineare relative Verlagerung der Stifte oder Finger die Handhabung von gewölbten flächigen Strukturen erschwert oder gar unmöglich macht. Wenn derartige Vorrichtungen dennoch bei gewölbten flächigen Strukturen eingesetzt würden, so bestünde die Gefahr von Beschädigungen, da bei der linearen Bewegung der Stifte eine starke globale Verformung der Struktur auftreten könnte und daher ein Reißen des Materials begünstigt wäre. Zuletzt sei auch noch darauf hingewiesen, dass in Konfigurationen, in welchen mehrere einzelne Vorrichtungen der eben beschriebenen Art gemeinsam eine gewölbte flächige Struktur handhaben sollen, dies einen erheblichen zusätzlichen Aufwand bedeuten würde, da sichergestellt werden müsste, dass die entsprechende Struktur in einer Orientierung vorliegt, welche ein Zugreifen darauf mit den jeweiligen Vorrichtungen mit linearer Verlagerung der Stifte oder Finger in einer Richtung voneinander weg erlaubt.

Es ist daher eine Aufgabe der vorliegenden Erfindung, eine verbesserte Vorrichtung zum Greifen einer flächigen Struktur mit Öffnungen im Bereich ihrer Oberseite bereitzustellen, welche sich insbesondere dadurch auszeichnet, dass sie auch zum Handhaben von gewölbten flächigen Strukturen in gleicher Weise geeignet ist, jedoch ohne erheblichen konstruktiven Zusatzaufwand auskommt und demzufolge keine wirtschaftlichen Nachteile mit sich bringt.

Zu diesem Zweck umfasst die erfindungsgemäße Vorrichtung zwei voneinander entlang einer Längsrichtung beabstandete Greifereinheiten, welche jeweils wiederum wenigstens einen Stift und wenigstens eine Stift-Verlagerungseinheit umfassen, wobei die Stift-Verlagerungseinheit dazu eingerichtet ist, den wenigstens einen Stift in einer Ausfahrrichtung zu verlagern, sowie eine Kippeinheit, welche dazu eingerichtet ist, wenigstens eine der Greifereinheiten um eine im Wesentlichen in einer Breitenrichtung verlaufende Kippachse zu kippen.

Hierbei zeigt sich, dass es durch das relative Verkippen der wenigstens zwei Greifereinheiten zueinander ermöglicht wird, einen entsprechenden Winkel zwischen den letztlich mit der Struktur in Kontakt tretenden Stiften derart einzustellen, dass die erfindungsgemäße Vorrichtung auf unterschiedlich gewölbte flächige Strukturen anpassbar und daher universell einsetzbar und flexibel ist, während gleichzeitig eine schonende Handhabung der flächigen Struktur ohne erheblichen zusätzlichen Aufwand erzielt werden kann.

Hierbei ist der Begriff der "flächigen Struktur" in einer derartigen Weise zu verstehen, dass hierin sämtliche Strukturen umfasst sein sollen, welche sich entlang einer Längenrichtung, einer Breitenrichtung und in geringerem Maße einer Höhenrichtung erstrecken, wobei jedoch ausdrücklich zulässig sein soll, dass bezogen auf diese Höhenrichtung eine Wölbung der Struktur vorliegen darf. Dementsprechend sind sowohl konvexe als auch konkave oder konvex-konkave flächige Strukturen von dieser Definition umfasst.

In diesem Zusammenhang sei ferner darauf verwiesen, dass die zur Beschreibung der Vorrichtung verwendeten Richtungen, also die "Längsrichtung", die "Breitenrichtung" und die "Höhenrichtung" lediglich zur Veranschaulichung der räumlichen Zusammenhänge dienen sollen und insbesondere senkrecht zueinander zu verlaufen haben. Selbstverständlich sind jedoch auch Konfigurationen möglich, in welchen die flächige Struktur zu Beginn eines Betriebsvorgangs der Vorrichtung für ein Greifen der Struktur nicht auf einer ebenen horizontalen Unterlage aufliegt, so dass die entsprechende "Höhenrichtung" dann nicht streng vertikal im Raum verlaufen würde. Dementsprechend wären die Längsrichtung und die Breitenrichtung dann ebenfalls im Raum gekippt, dies stellt jedoch keine Beschränkung der vorliegenden Erfindung dar, sondern soll ausdrücklich hierin umfasst sein.

Ebenfalls ist auch der Begriff der "Stifte" im Rahmen der vorliegenden Erfindung breit zu verstehen und soll sämtliche länglichen Strukturen umfassen, welche in der beschriebenen Weise geeignet sind, in die Öffnungen der flächigen Struktur eingeführt zu werden, um anschließend mitsamt der Greifereinheiten gekippt zu werden, damit sie mit dem Material der Struktur in Kontakt treten und eine Handhabung davon ermöglichen. Hierbei sei ebenfalls darauf hingewiesen, dass die Ausfahrrichtung der Stifte zunächst einmal der eben erläuterten Höhenrichtung entsprechen kann, jedoch auch Konfigurationen denkbar sind, in welchen die Greifereinheiten bereits zu Beginn eines Betriebsvorgangs oder auch konstruktiv vorgegeben hinsichtlich ihrer jeweiligen Ausfahrrichtungen unter einem Winkel zueinander stehen, so dass lediglich eine oder auch gar keine der Ausfahrrichtungen streng entlang der Höhenrichtung verläuft.

Weiterhin sei darauf hingewiesen, dass die erfindungsgemäße Vorrichtung an einer übergeordneten Funktionseinheit montiert sein kann, welche letztendlich den Transport der gegriffenen flächigen Struktur bewirken kann. Hierbei kann es sich beispielsweise um einen mehrachsigen Roboterarm oder beliebige andere Funktionseinheiten handeln, welche eine Verlagerung der Vorrichtung zusammen mit der gegriffenen flächigen Struktur im Raum ermöglichen können. In bestimmten Ausführungsformen wäre beispielsweise auch eine manuelle Bewegung der Vorrichtung entlang bestimmter Wege mitsamt der gegriffenen Struktur denkbar. Dementsprechend zeigt sich auch hier, dass die oben angesprochenen Längs-, Breiten- und Höhenrichtungen der Vorrichtung und der gegriffenen Struktur durch eine Verlagerung mittels der Funktionseinheit im Raum geschwenkt werden können.

Hierbei kann eine koordinierte Steuerung der einzelnen funktionellen Komponenten der erfindungsgemäßen Vorrichtung mittels einer einzelnen Steuereinheit erfolgen, welche ferner mit externen Komponenten gekoppelt sein kann, um eine Integration des Betriebs der Vorrichtung in einem übergeordneten Zusammenhang zu ermöglichen. Insbesondere kann eine Kopplung oder Integration der Steuereinheit der Vorrichtung mit einer Steuereinheit der übergeordneten Funktionseinheit vorgesehen sein, so dass das Greifen der Struktur mittels der Vorrichtung und ihr anschließender Transport sowie das Absetzen davon in einer koordinierten und optimierten Weise stattfinden können.

Um ein sicheres Greifen der flächigen Struktur sicherstellen zu können und ein Verrutschen oder Kippen davon entlang der Breitenrichtung und/oder der Längsrichtung zu verhindern, kann jede der Greifereinheiten wenigstens zwei in der Breitenrichtung voneinander beabstandete und in der Ausfahrrichtung verlagerbare Stifte umfassen. Hierbei kann jedem der Stifte eine separate Stift-Verlagerungseinheit zugeordnet sein oder eine einzelne Stift-Verlagerungseinheit kann dazu eingerichtet sein, mehrere Stifte gleichzeitig zu verlagern, beispielsweise indem diese mechanisch miteinander gekoppelt oder integral miteinander ausgebildet sind.

Um das relative Kippen der beiden Greifereinheiten zueinander zu ermöglichen, kann die erfindungsgemäße Vorrichtung ferner eine Grundplatte umfassen, wobei die Greifereinheiten jeweils in einer schwenkbaren Weise an der Grundplatte montiert sind. Dementsprechend müsste dann die Kippeinheit eine Kippbewegung der entsprechenden wenigstens einen Greifereinheit derart bewirken, dass diese bezüglich der Grundplatte verschwenkt wird. Hierbei ist insbesondere denkbar, ein Paar von einander gegenüberliegenden Grundplatten vorzusehen, wobei die Greifereinheiten zwischen den Grundplatten eingefügt und jeweils schwenkbar an diesen montiert sind. Entsprechend könnte die oder eine der Grundplatten oder auch ein weiteres an der oder einer der Grundplatten montiertes Element als Schnittstelle für die Anbringung der Vorrichtung an der oben erwähnten Funktionseinheit dienen. Jedoch sind auch andere Konfigurationen der erfindungsgemäßen Vorrichtung denkbar, beispielsweise könnte eine jeweilige Lagerung der Greifereinheiten auch unmittelbar an der Kippeinheit vorgesehen sein, welche dann direkt eine entsprechende Schwenkbewegung beispielsweise über Stellmotoren bewerkstelligen könnte. In solchen Ausführungsformen mit als wenigstens ein drehend wirkender Stellmotor ausgeführter Kippeinheit wäre dann ebenfalls denkbar, eine voreingestellte Weg- oder Kraftsteuerung beim Betrieb der Kippeinheit vorzusehen, um das Greifen der Struktur noch schonender durchführen zu können.

In einer besonders einfachen Ausführungsform kann die Vorrichtung jedoch auch derart ausgestaltet sein, dass die Greifereinheiten gegeneinander um eine einzelne in der Breitenrichtung verlaufende Kippachse verkippbar sein können. Dementsprechend wäre dann durch die Kippeinheit eine Kraft auf diese Kippachse auszuüben, um das Kippen der Greifereinheiten relativ zueinander zu bewirken.

Wenngleich die Kippachse in einer derartigen Weise angeordnet sein könnte, dass die beiden Greifereinheiten eine symmetrische relative Kippbewegung vollführen, insbesondere indem die Kippachse bezogen auf die Längsrichtung auf halber Strecke zwischen den Greifereinheiten angeordnet wird, so sind ebenfalls Ausführungsformen denkbar, in welchen eine unsymmetrische Verkippung erwünscht wird, welche insbesondere hervorgerufen werden kann, indem die Kippachse bezogen auf die Längsrichtung außerhalb der Mitte zwischen den beiden Greifereinheiten angeordnet wird. In diesem Zusammenhang könnte ferner daran gedacht werden, die Kippachse in Längsrichtung manuell oder angetrieben verlagerbar zwischen den beiden Greifereinheiten anzuordnen, beispielsweise gemeinsam mit der gesamten Kippeinheit. Auf diese Weise könnte ein Bereich überstrichen werden, welcher sowohl eine zentrale Platzierung der Kippachse und damit ein symmetrisches Kippen als auch eine Platzierung der Kippachse außerhalb der Mitte in einem vorbestimmten Verlagerungsbereich und damit ein unsymmetrisches Kippen der beiden Greifereinheiten ermöglicht.

Selbstverständlich ist eine derartige unsymmetrische Verkippung auch auf andere Weisen erzielbar, beispielsweise indem in Ausführungsformen der erfindungsgemäßen Vorrichtung, in welchen ein direktes Schwenken der Greifereinheiten durch die Kippeinheit über Drehmotoren vorgesehen ist, diese in einer jeweils unterschiedlichen Weise angesteuert werden.

Eine konstruktiv besonders einfache und betriebssichere Ausführung der Kippeinheit kann jedoch in der beschriebenen Ausführungsform mit einzelner Kippachse dadurch erzielt werden, dass die Kippeinheit dazu eingerichtet ist, die Kippachse in einer Höhenrichtung zu verlagern, um das Kippen der Greifereinheiten hervorzurufen. Zu diesem Zweck sind die beiden Greifereinheiten dann beispielsweise schwenkbar an der oben beschriebenen Grundplatte angebracht und ebenfalls schwenkbar mit der Kippachse verbunden, so dass eine Verlagerung der Kippachse in Höhenrichtung in eine Kippbewegung der Greifereinheiten umgesetzt wird.

Wenngleich im Wesentlichen beliebige Bauformen zu diesem Zweck verwendet werden können und bei der konkreten Auswahl nach wirtschaftlichen oder integrativen Gesichtspunkten entschieden werden kann, so kann die wenigstens eine Stift-Verlagerungseinheit und/oder die Kippeinheit als Hydraulikzylinder, Pneumatikzylinder oder elektrischer Linearaktuator gebildet sein. Hierbei versteht sich, dass die Ansteuerung der entsprechenden Komponenten dann mittels geeigneter Steuerungselemente für den jeweiligen Typ davon zu bewerkstelligen ist, also beispielsweise mittels steuerbarer Hydraulik- oder Pneumatikventile oder elektrischer Treibereinheiten.

Ferner können die Stifte in der erfindungsgemäßen Vorrichtung jeweils abgerundete Spitzen aufweisen, um eine Beschädigung des Materials der flächigen Struktur bei einem Greifen davon zu verhindern und insgesamt einen großflächigeren Kontakt zwischen der Vorrichtung und der Struktur zu bewirken. Auch an dieser Stelle kann jedoch in jedem Fall eine Anpassung der Gestaltung der Stifte an einen konkreten Anwendungsfall vorgenommen werden, also beispielsweise an das Material, die Wandstärke und/oder die Abstände zwischen den Öffnungen der zu greifenden flächigen Struktur.

Gemäß einem weiteren Aspekt betrifft die vorliegende Erfindung eine Baugruppe, umfassend wenigstens zwei erfindungsgemäße Vorrichtungen der eben beschriebenen Art, welche in der Breitenrichtung und/oder der Längsrichtung voneinander beabstandet sind. Indem die wenigstens zwei Vorrichtungen in koordinierter Weise betrieben und ggf. unabhängig voneinander mittels wenigstens einer übergeordneten Funktionseinheit verlagert werden, wird die Flexibilität dieser Baugruppe verglichen mit einer einzelnen Vorrichtung der oben beschriebenen Art weiter erhöht, indem es möglich wird, eine flächige Struktur in mehreren Bereichen zu greifen. Hierdurch wird insbesondere die Möglichkeit zur Handhabung von gewölbten Strukturen weiter verbessert, da durch die Schaffung zusätzlicher räumlicher Freiheitsgrade ein sicheres Greifen auch von sehr unregelmäßig gewölbten Strukturen ermöglicht wird.

Zu diesem Zweck können insbesondere wenigstens zwei der Vorrichtungen der Baugruppe hinsichtlich ihrer jeweiligen Höhenrichtung einen Winkel zueinander aufweisen oder bezüglich dieses Winkels zueinander einstellbar sein. Auf diese Weise kann eine Wölbung der zu greifenden flächigen Struktur auch zwischen den einzelnen Vorrichtungen bereits ausgeglichen werden.

Gemäß einem weiteren Aspekt betrifft die vorliegende Erfindung ein Verfahren zum Greifen einer flächigen Struktur mit Öffnungen im Bereich ihrer Oberseite, insbesondere einer Wabenstruktur, mittels einer erfindungsgemäßen Vorrichtung der oben beschriebenen Art, umfassend die Schritte eines Positionierens der Vorrichtung bezogen auf ihre Höhenrichtung oberhalb der flächigen Struktur, eines Verlagerns der Stifte in Ausfahrrichtung in den Bereich der flächigen Struktur hinein, und eines Kippens von wenigstens einer der Greifereinheiten um ihre Kippachse.

Dementsprechend kann durch das erfindungsgemäße Verfahren mittels der hierzu verwendeten Vorrichtung auf eine lineare Verlagerung der Stifte voneinander weg in der Längsrichtung verzichtet werden und lediglich durch ein Kippen von wenigstens einer der Greifereinheiten die flächige Struktur gegriffen und dann anschließend in beliebiger Weise transportiert oder anderweitig gehandhabt werden. Hierbei versteht sich, dass ein letztendliches Ablegen bzw. Abgeben der Struktur durch eine Umkehrung der genannten Schritte durchgeführt werden kann, also ein Zurückverkippen der Greifereinheiten in ihre Ausgangsstellung, ein Verlagern der Stifte aus dem Bereich der flächigen Struktur heraus und ein Entfernen der Vorrichtung von der Struktur.

In ähnlicher Weise kann ein erfindungsgemäßes Verfahren zum Greifen einer flächigen Struktur, insbesondere einer Wabenstruktur, auch mittels einer Baugruppe der oben beschriebenen Art durchgeführt werden, umfassend die Schritte eines Positionierens der Vorrichtungen bezogen auf ihre jeweiligen Höhenrichtungen oberhalb der flächigen Struktur, eines Verlagerns der Stifte von wenigstens einigen der Vorrichtungen in Ausfahrrichtung in den Bereich der flächigen Struktur hinein, und eines Kippens von jeweils wenigstens einer der Greifereinheiten von jeder der Vorrichtungen um ihre jeweilige Kippachse.

In beiden eben beschriebenen Verfahren kann für eine Anpassung der Vorrichtung bzw. der Baugruppe vor dem Schritt des Verlagerns der Stifte ein Schritt eines anfänglichen Kippens von wenigstens einer der Greifereinheiten vorgesehen sein, so dass die Ausfahrrichtungen der Stifte der unterschiedlichen Greifereinheiten bereits einen Winkel zueinander aufweisen, insbesondere um die Form einer gewölbten flächigen Struktur nachzubilden und dann in der oben beschriebenen Weise das erfindungsgemäße Verfahren weiter durchzuführen.

Während das erfindungsgemäße Verfahren für unterschiedliche Typen von flächige Strukturen einsetzbar ist, so können diese jedoch insbesondere aus Papier, imprägniertem Papier oder Metall gebildet sein und/oder gleichmäßig beabstandete Öffnungen aufweisen, wie es beispielsweise in Wabenstrukturen der Fall ist. Weitere beispielhafte Typen von mittels des erfindungsgemäßen Verfahrens greifbaren Strukturen umfassen organische oder metallische Schäume, Gummistrukturen oder biologische Materialien.

Es sei darauf hingewiesen, dass Merkmale, Vorteile oder Effekte, welche mit Bezug auf die Vorrichtung und/oder die Baugruppe beschrieben worden sind, gleichermaßen auf eines der erfindungsgemäßen Verfahren anwendbar sein können, und umgekehrt.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: eine isometrische Ansicht einer erfindungsgemäßen Vorrichtung; und
- Figuren 2a bis 2c: jeweilige Ansichten, welche einen Prozess eines Greifens einer flächigen Struktur mit der Vorrichtung aus Figur 1 verdeutlichen.

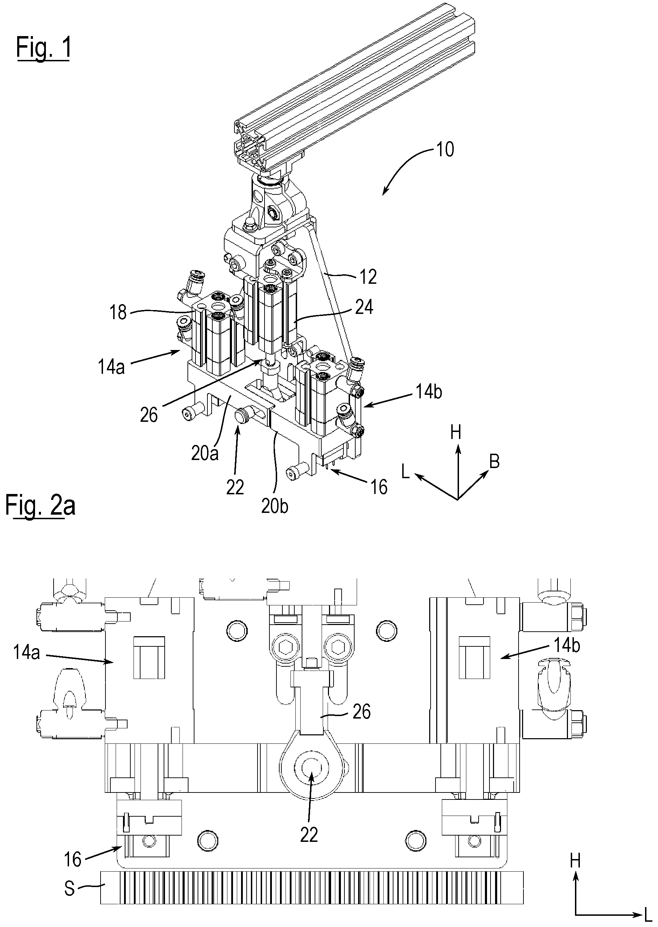

**In** Figur 1 ist eine erfindungsgemäße Vorrichtung zum Greifen einer flächigen Struktur mit Öffnungen im Bereich ihrer Oberseite zunächst einmal in einer isometrischen Ansicht dargestellt und ganz allgemein mit dem Bezugszeichen 10 bezeichnet. Hierbei sind eine jeweilige Längsrichtung L, eine Breitenrichtung B und eine Höhenrichtung H bezüglich der Vorrichtung 10 definiert und in Figur 1 durch ein Koordinatenkreuz angedeutet.

Die Vorrichtung 10 umfasst hierbei eine Grundplatte 12, welche zur strukturellen Montage der im Folgenden beschriebenen funktionellen Komponenten dient und welche ebenfalls eine Schnittstelle zu einer übergeordneten Struktur darstellen oder umfassen kann, wie beispielweise einem in Fig. 1 angedeuteten Roboterarm oder einer ähnlichen Funktionseinheit, welche dazu eingerichtet ist, die Vorrichtung 10 als Ganzes im Raum verlagern zu können, insbesondere gemeinsam mit einer von ihr getragenen flächigen Struktur.

In Längsrichtung L voneinander beabstandet umfasst die Vorrichtung 10 zwei Greifereinheiten 14a und 14b, welche jeweils um eine in Breitenrichtung B verlaufende Schwenkachse schwenkbar an der Grundplatte 12 angebracht sind, so dass sie als Ganzes relativ zueinander verkippt werden können. Jede der Greifereinheiten 14a und 14b umfasst an ihrer Unterseite ein Paar von in Breitenrichtung B beabstandeten Stiften 16 sowie eine jeweilige Stift-Verlagerungseinheit 18, mittels welcher die Stifte entlang einer Ausfahrrichtung verlagert werden können. In der in Figur 1 gezeigten Konfiguration stehen die Stifte 16 der beiden Greifereinheiten 14a und 14b parallel zueinander und die jeweiligen Ausfahrrichtungen entsprechen gerade der Höhenrichtung H.

Wie ebenfalls in Figur 1 gut zu erkennen ist, sind die beiden Greifereinheiten 14a und 14b mit jeweiligen in der gezeigten Konfiguration in Längsrichtung L verlaufenden Armen 20a bzw. 20b versehen und über diese drehbar an einer in Breitenrichtung B verlaufenden Kippachse 22 getragen. Indem nun diese Kippachse 22 in Höhenrichtung H verlagert wird, werden die Arme 20a und 20b in ihrem den Greifereinheiten 14a und 14b abgewandten Endbereichen mitgenommen und dementsprechend die Greifereinheiten 14a und 14b gekippt. Hierbei können für einen Längenausgleich die Arme 20a und 20b teleskopierbar ausgebildet sein oder andere geeignete Maßnahmen getroffen sein, um das Kippen der Arme 20a, 20b und damit der Greifereinheiten 14a, 14b zu ermöglichen. Es sei an dieser Stelle darauf hingewiesen, dass die Kippachse 22 in der in Figur 1 gezeigten Ausführungsform bezogen auf die Längsrichtung L zentral zwischen den Greifereinheiten 14a und 14b verläuft, so dass das Kippen der beiden Greifereinheiten 14a und 14b stets symmetrisch ablaufen wird. Es sind jedoch selbstverständlich auch alternative Ausführungsformen denkbar, in welchen die Kippachse 22 aus der Mitte in Richtung von einer der beiden Greifereinheiten 14a oder 14b versetzt ist, so dass das Kippen asymmetrisch ablaufen wird.

Zum Auslösen der Verlagerung der Kippachse 22 in Höhenrichtung H und damit des Kippens der Greifereinheiten 14a und 14b ist im oberen Bereich der Grundplatte 12 eine Kippeinheit 24 vorgesehen, welche über eine Kolbenstange 26 mit der Kippachse 22 verbunden ist und diese linear verlagern kann. Hierbei sind in der gezeigten Ausführungsform die beiden Stift-Verlagerungseinheiten 18 und die Kippeinheit 24 jeweils als linear wirkende Pneumatikzylinder ausgeführt, welche über geeignete Anschlüsse in gesteuerter Weise mit Druckluft versorgt werden können, um einen gesteuerten und koordinierten Betrieb davon zu ermöglichen. Hierzu können in Figur 1 nicht dargestellte Steuerkomponenten eingesetzt werden, beispielsweise steuerbare Ventile und eine mit diesen gekoppelte elektronische Steuereinheit, welche ferner eine funktionelle Schnittstelle zu übergeordneten Strukturen schaffen kann oder auch bereits bei einer übergeordneten Struktur integriert sein kann. Ferner sei an dieser Stelle darauf hingewiesen, dass in anderen Varianten einer erfindungsgemäßen Vorrichtung die beiden Stift-Verlagerungseinheiten 18 und die Kippeinheit 24 auch als Hydraulikzylinder und/oder als elektrische Linearaktuatoren ausgebildet sein können.

Unter Bezugnahme auf die Figuren 2a bis 2c sei nun die Funktionsweise der Vorrichtung 10 bzw. ein Verfahren zum Betreiben davon erläutert. Die Figuren 2a bis 2c zeigen hierbei jeweils einen unterschiedlichen Zustand der Vorrichtung 10 während eines Greifens einer flächigen Struktur S mit Öffnungen im Bereich ihrer Oberseite in Form einer Wabenstruktur in Vorderansicht entlang der Breitenrichtung B.

Hierbei ist zu erkennen, dass in dem Zustand aus Figur 2a zunächst einmal die Vorrichtung 10 bezogen auf die Höhenrichtung H oberhalb der flächigen Struktur S positioniert worden ist, wobei die beiden Greifereinheiten 14a und 14b jeweils derart ausgerichtet sind, dass ihre jeweiligen Stifte 16 ebenfalls streng in Höhenrichtung H verlaufen.

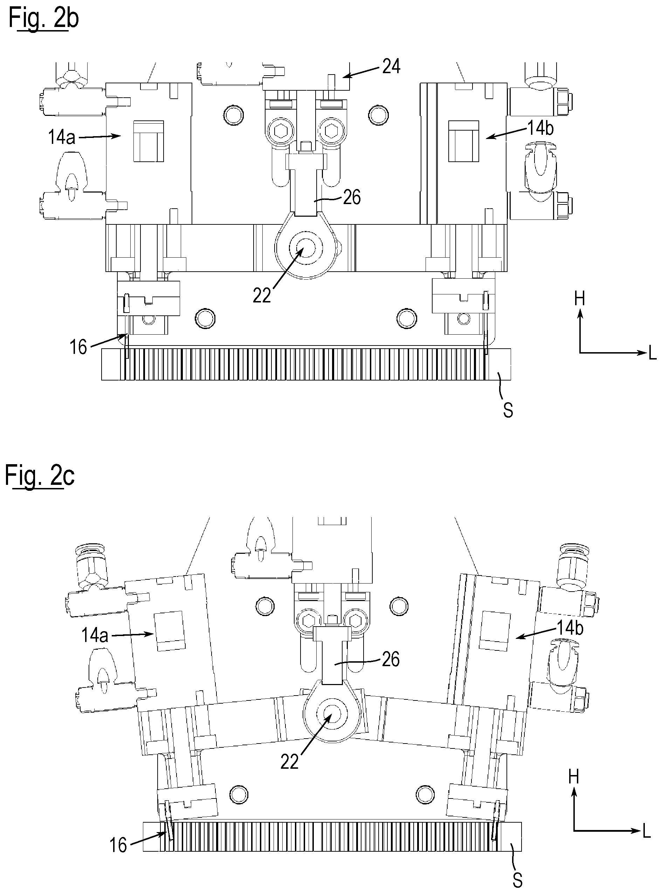

In Figur 2b ist dem hingegen ein Zustand gezeigt, in welchem die Stifte 16 mittels der jeweiligen Stift-Verlagerungseinheiten 18 in Höhenrichtung H abgesenkt worden sind und damit in die Öffnungen der Struktur S hinein eingetreten sind. Es sei an dieser Stelle darauf hingewiesen, dass die beiden Stifte 16 von jeder der Greifereinheiten 14a und 14b an einem gemeinsamen Basiselement angebracht sind, welches als Ganzes von der jeweiligen Stift-Verlagerungseinheit 18 verlagert wird. Es sind jedoch auch Varianten der Vorrichtung 10 denkbar, in welchen jedem der Stifte eine eigene Stift-Verlagerungseinheit zugeordnet ist.

In Figur 2c ist schließlich ein Zustand gezeigt, in welchem durch eine Betätigung der Kippeinheit 24 die Kippachse 22 in Höhenrichtung H nach oben verlagert worden ist, so dass die beiden Greifereinheiten 14a und 14b in einer derartigen Weise gekippt worden sind, dass ihre Stifte 16 in Höhenrichtung H nach unten aufeinander zu weisen und durch den so entstehenden Winkel mit den Wandungen der flächigen Struktur S in Kontakt kommen.

Durch den derart entstehenden Materialschluss zwischen der Vorrichtung 10 und der Struktur S ist diese nun gegriffen worden und kann transportiert werden. Es versteht sich, dass zu einem Ablegen oder Absetzen der Struktur S die Zustände aus den Figuren 2a bis 2c in umgekehrter Reihenfolge durchlaufen werden können, also die Greifereinheiten 14a und 14b zurück in ihre Ausgangsstellung gekippt werden können und anschließend die Stifte 16 zurückgezogen und/oder die Vorrichtung 10 aus dem Bereich der Struktur S entfernt. Aus den hier dargestellten Figuren ergibt sich, dass die Vorrichtung 10 insbesondere zum Greifen einer gewölbten flächigen Struktur geeignet ist, da durch die Winkel der Stifte 16 in dem Zustand aus Figur 2c unterschiedliche denkbare Wölbungen derartiger Struktur ausgleichen werden können und auch bereits in den Zuständen aus den Figuren 2a und 2b die Greifereinheiten 14a und 14b einen anfänglichen Kippwinkel entsprechend der Wölbung aufweisen können, so dass die Ausfahrrichtungen der Stifte 16 an diese Wölbung von Anfang an angepasst sein können.

## Patentansprüche

1. Vorrichtung (10) zum Greifen einer flächigen Struktur (S) mit Öffnungen im Bereich ihrer Oberseite, insbesondere einer Wabenstruktur, umfassend zwei voneinander entlang einer Längsrichtung (L) beabstandete Greifereinheiten (14a, 14b), welche jeweils wenigstens einen Stift (16) umfassen,
**dadurch gekennzeichnet, dass** die Greifereinheiten (14a, 14b) jeweils wiederum wenigstens eine Stift-Verlagerungseinheit (18) umfassen, welche dazu eingerichtet ist, den wenigstens einen Stift (16) in einer Ausfahrrichtung zu verlagern; und
dass die Vorrichtung eine Kippeinheit (24) umfasst, welche dazu eingerichtet ist, wenigstens eine der Greifereinheiten (14a, 14b) um eine im Wesentlichen in einer Breitenrichtung (B) verlaufende Kippachse (22) zu kippen.

2. Vorrichtung (10) nach Anspruch 1,
wobei jede der Greifereinheiten (14a, 14b) wenigstens zwei in der Breitenrichtung (B) voneinander beabstandete und in der Ausfahrrichtung verlagerbare Stifte (16) umfasst.

3. Vorrichtung (10) nach Anspruch 2,
wobei jedem der Stifte (16) eine separate Stift-Verlagerungseinheit (18) zugeordnet ist.

4. Vorrichtung (10) nach einem der vorhergehenden Ansprüche,
ferner umfassend eine Grundplatte (12),
wobei die Greifereinheiten (14a, 14b) jeweils in einer schwenkbaren Weise an der Grundplatte (12) montiert sind.

5. Vorrichtung (10) nach einem der vorhergehenden Ansprüche,
wobei die Greifereinheiten (14a, 14b) gegeneinander um eine einzelne in der Breitenrichtung (B) verlaufende Kippachse (22) verkippbar sind.

6. Vorrichtung (10) nach Anspruch 5,
wobei die Kippachse (22) bezogen auf die Längsrichtung (L) außerhalb der Mitte zwischen den beiden Greifereinheiten (14a, 14b) angeordnet ist, um eine unsymmetrische Verkippung davon zu ermöglichen.

7. Vorrichtung (10) nach Anspruch 5 oder 6,
wobei die Kippeinheit (24) dazu eingerichtet ist, die Kippachse (22) in einer Höhenrichtung (H) zu verlagern, um das Kippen der Greifereinheiten (14a, 14b) hervorzurufen.

8. Vorrichtung (10) nach einem der vorhergehenden Ansprüche,
wobei die wenigstens eine Stift-Verlagerungseinheit (18) und/oder die Kippeinheit (24) als Hydraulikzylinder, Pneumatikzylinder oder elektrischer Linearaktuator gebildet ist.

9. Vorrichtung (10) nach einem der vorhergehenden Ansprüche,
wobei die Stifte (16) jeweils abgerundete Spitzen aufweisen.

10. Baugruppe, umfassend wenigstens zwei Vorrichtungen (10) nach einem der vorhergehenden Ansprüche, welche in der Breitenrichtung (B) und/oder Längsrichtung (L) voneinander beabstandet sind.

11. Baugruppe nach Anspruch 10,
wobei die wenigstens zwei Vorrichtungen (10) hinsichtlich ihrer jeweiligen Höhenrichtungen (H) einen Winkel zueinander aufweisen oder bezüglich dieses Winkels zueinander einstellbar sind.

12. Verfahren zum Greifen einer flächigen Struktur (S) mit Öffnungen im Bereich ihrer Oberseite, insbesondere einer Wabenstruktur, mittels einer Vorrichtung nach einem der Ansprüche 1 bis 9, umfassend die Schritte:
- Positionieren der Vorrichtung (10) bezogen auf ihre Höhenrichtung (H) oberhalb der flächigen Struktur (S);
- Verlagern der Stifte (16) in Ausfahrrichtung in den Bereich der flächigen Struktur (S) hinein; und
- Kippen von wenigstens einer der Greifereinheiten (14a, 14b) um ihre Kippachse (22).

13. Verfahren zum Greifen einer flächigen Struktur (S) mit Öffnungen im Bereich ihrer Oberseite, insbesondere einer Wabenstruktur, mittels einer Baugruppe nach einem der Ansprüche 10 und 11, umfassend die Schritte:
- Positionieren der Vorrichtungen (10) bezogen auf ihre jeweiligen Höhenrichtungen (H) oberhalb der flächigen Struktur (S);
- Verlagern der Stifte (16) von wenigstens einigen der Vorrichtungen (10) in Ausfahrrichtung in den Bereich der flächigen Struktur (S) hinein; und
- Kippen von jeweils wenigstens einer der Greifereinheiten (14a, 14b) von jeder der Vorrichtungen (10) um ihre jeweilige Kippachse (22).

14. Verfahren nach einem der Ansprüche 12 und 13,
ferner umfassend vor dem Schritt des Verlagerns der Stifte (16) einen Schritt eines anfänglichen Kippens von wenigstens einer der Greifereinheiten (14a, 14b).

15. Verfahren nach einem der Ansprüche 12 bis 14,
wobei die Struktur (S) aus Papier, imprägniertem Papier oder Metall gebildet ist und/oder gleichmäßig beabstandete Öffnungen aufweist.

## Claims

1. Device (10) for gripping a flat structure (S) with openings in the area of its upper side, in particular a honeycomb structure, comprising:
two gripper units (14a, 14b) spaced apart from each other in a length direction (L), each of them comprising at least one pin (16),
**characterized in that** the gripper units (14a, 14b) each in turn comprise a pin displacement unit (18) adapted to displace the at least one pin (16) in an extending direction; and
that the device comprises a tilting unit (24) which is adapted to tilt at least one of the gripper units (14a, 14b) about a tilting axis (22) extending substantially in a width direction (B).

2. Device (10) according to claim 1,
wherein each of the gripper units (14a, 14b) comprises at least two pins (16) spaced apart in the width direction (B) and displaceable in the extending direction.

3. Device (10) according to claim 2,
wherein a separate pin displacement unit (18) is associated with each of the pins (16).

4. Device (10) according to any of the preceding claims,
further comprising a base plate (12),
wherein each of the gripper units (14a, 14b) is pivotably mounted on the base plate (12).

5. Device (10) according to any of the preceding claims,
wherein the gripper units (14a, 14b) are tiltable relative to each other about a single tilting axis (22) extending in the width direction (B).

6. Device (10) according to claim 5,
wherein the tilting axis (22) is disposed off-centre with respect to the length direction (L) between the two gripper units (14a, 14b) to allow asymmetric tilting.

7. Device (10) according to claim 5 or 6,
wherein the tilting unit (24) is adapted to displace the tilting axis (22) in a height direction (H) to cause tilting of the gripper units (14a, 14b).

8. Device (10) according to any of the preceding claims,
wherein the at least one pin displacement unit (18) and/or the tilting unit (24) is formed as a hydraulic cylinder, pneumatic cylinder or electric linear actuator.

9. Device (10) according to any of the preceding claims,
wherein the pins (16) each have rounded tips.

10. Assembly comprising at least two devices (10) according to any of the preceding claims which are spaced apart in the width direction (B) and/or length direction (L).

11. Assembly according to claim 10,
wherein the at least two devices (10) are at an angle to each other with regard to their respective height directions (H) or are adjustable in terms of this angle relative to each other.

12. Method of gripping a flat structure (S) having openings in the area of its upper side, in particular a honeycomb structure, by means of a device according to any of claims 1 to 9, comprising the following steps:
- Positioning the device (10) with respect to its height direction (H) above the flat structure (S);
- Displacing the pins (16) in the extending direction into the area of the flat structure (S); and
- Tilting at least one of the gripper units (14a, 14b) about its tilting axis (22).

13. Method of gripping a flat structure (S) having openings in the area of its upper side, in particular a honeycomb structure, by means of an assembly according to one of claims 10 and 11, comprising the following steps:
- Positioning the devices (10) with regard to their respective height directions (H) above the flat structure (S);
- Displacing the pins (16) of at least some of the devices (10) in the extending direction into the area of the flat structure (S); and
- Tilting at least one of the gripper units (14a, 14b) of each of the devices (10) about its respective tilting axis (22).

14. Method according to one of claims 12 and 13,
further comprising, prior to the step of displacing the pins (16), a step of initially tilting at least one of the gripper units (14a, 14b).

15. Method according to one of claims 12 to 14,
wherein the structure (S) is formed of paper, impregnated paper or metal and/or has evenly spaced openings.

## Revendications

1. Dispositif (10) de préhension d'une structure plane (S) avec des ouvertures dans la zone de sa face supérieure, en particulier d'une structure en nid d'abeilles, comprenant deux unités de préhension (14a, 14b) espacées l'une de l'autre le long d'une direction longitudinale (L), qui comprennent chacune au moins une goupille (16),
**caractérisé en ce que** les unités de préhension (14a, 14b) comprennent chacune à leur tour au moins une unité de déplacement de goupille (18), qui est mise au point pour déplacer l'au moins une goupille (16) dans une direction de sortie ; et que le dispositif comprend une unité de basculement (24) qui est mise au point pour basculer au moins une des unités de préhension (14a, 14b) autour d'un axe de basculement (22) s'étendant sensiblement dans une direction de largeur (B).

2. Dispositif (10) selon la revendication 1,
dans lequel chacune des unités de préhension (14a, 14b) comprend au moins deux goupilles (16) espacées l'une de l'autre dans la direction de largeur (B) et déplaçables dans la direction de sortie.

3. Dispositif (10) selon la revendication 2,
dans lequel une unité de déplacement de goupille (18) distincte est associée à chacune des goupilles (16).

4. Dispositif (10) selon l'une des revendications précédentes,
comprenant en outre une plaque de base (12),
dans lequel les unités de préhension (14a, 14b) sont montées chacune de manière pivotante sur la plaque de base (12).

5. Dispositif (10) selon l'une des revendications précédentes,
dans lequel les unités de préhension (14a, 14b) sont basculables l'une par rapport à l'autre autour d'un seul axe de basculement (22) s'étendant dans la direction de largeur (B).

6. Dispositif (10) selon la revendication 5,
dans lequel l'axe de basculement (22) est disposé en dehors du milieu entre les deux unités de préhension (14a, 14b) par rapport à la direction longitudinale (L) pour permettre un basculement asymétrique de celles-ci.

7. Dispositif (10) selon la revendication 5 ou 6,
dans lequel l'unité de basculement (24) est mise au point pour déplacer l'axe de basculement (22) dans une direction de hauteur (H) pour provoquer le basculement des unités de préhension (14a, 14b).

8. Dispositif (10) selon l'une des revendications précédentes,
dans lequel l'au moins une unité de déplacement de goupille (18) et/ou l'unité de basculement (24) sont formées en tant que vérin hydraulique, vérin pneumatique ou actionneur linéaire électrique.

9. Dispositif (10) selon l'une des revendications précédentes,
dans lequel les goupilles (16) présentent chacune des pointes arrondies.

10. Ensemble comprenant au moins deux dispositifs (10) selon l'une des revendications précédentes, qui sont espacés l'un de l'autre dans la direction de largeur (B) et/ou dans la direction longitudinale (L).

11. Ensemble selon la revendication 10,
dans lequel les au moins deux dispositifs (10) présentent un angle l'un par rapport à l'autre par rapport à leurs directions respectives de hauteur (H) ou sont réglables l'un par rapport selon cet angle.

12. Procédé de préhension d'une structure plane (S) avec des ouvertures dans la zone de sa face supérieure, en particulier d'une structure en nid d'abeilles, au moyen d'un dispositif selon l'une des revendications 1 à 9, comprenant les étapes :
- de positionnement du dispositif (10) par rapport à sa direction de hauteur (H) au-dessus de la structure plane (S) ;
- de déplacement des goupilles (16) dans la direction de sortie dans la zone de la structure plane (S) ; et
- de basculement d'au moins une des unités de préhension (14a, 14b) autour de son axe de basculement (22).

13. Procédé de préhension d'une structure plane (S) avec des ouvertures dans la zone de sa face supérieure, en particulier d'une structure en nid d'abeilles, au moyen d'un ensemble selon l'une des revendications 10 et 11, comprenant les étapes :
- de positionnement des dispositifs (10) par rapport à leurs directions de hauteur (H) respectives au-dessus de la structure plane (S) ;
- de déplacement des goupilles (16) d'au moins certains des dispositifs (10) dans la direction de sortie dans la zone de la structure plane (S) ; et
- de basculement d'au moins une des unités de préhension (14a, 14b) de chacun des dispositifs (10) autour de leur axe de basculement (22) respectif.

14. Procédé selon l'une des revendications 12 et 13,
comprenant en outre, avant l'étape de déplacement des goupilles (16), une étape de basculement initial d'au moins l'une des unités de préhension (14a, 14b).

15. Procédé selon l'une des revendications 12 à 14,
dans lequel la structure (S) est formée de papier, de papier imprégné ou de métal et/ou présente des ouvertures espacées uniformément.
